# EUROPEAN PATENT SPECIFICATION

(11) **EP 2 966 465 B1**
(45) Date of publication and mention of the grant of the patent: **30.09.2020**
(21) Application number: 14176092.6
(22) Date of filing: 08.07.2014
(51) Int. Cl.: G01S 7/00, G01S 17/86, G01S 19/09, G01S 19/37

(54) **RECAPTURE PROCESSING**
WIEDERAUFNAHMEVERARBEITUNG
TRAITEMENT DE RÉCUPÉRATION

(43) Date of publication of application: 13.01.2016
(73) Proprietor: Trimble Inc., Sunnyvale CA 94085 (US)
(72) Inventor: Pagels, Christian, 85630 Grasbrunn (DE); Drummond, Paul, 8081 Christchurch (NZ)
(74) Representative: Hoffmann Eitle

(56) References cited:
- WO-A1-2013/123439

## Description

### Field of the invention

The present application relates to determining a time sequence of remote station parameters in association with each of a plurality of remote stations of a surveillance system.

### Technological background of the application

A surveillance system may include a central station and a plurality of remote stations distributed in a monitoring area and may be used to monitor a time sequence of remote station parameters in association with the remote stations.

In an operation, the remote stations individually perform a time sequence of observations, also termed epochs of observations. Observations at the remote stations at the same instant in time constitute a group of epochs.

The time sequences of observations at the remote stations are reported to the central station and the central station performs a combined processing thereof to determine a corresponding time sequence of remote station parameters. The combined processing of the sequences of observations for groups of epochs is superior in accuracy to the separate determination of the remote station parameters on the basis of the individual observations alone.

The combined processing may be constituted by a filtering process, such as a filtering process including a Kalman filter, performing a time-based filter process on the individual observations, or any other filter.

One factor greatly influencing the quality of the combined processing of the measurements reported to the central station and thus of the quality of the determination of the remote station parameters is the availability of the observations made at the remote stations. If observations at one or more remote stations were temporarily unavailable at the central station for the combined processing, such as due to a transmission failure of the observations to the central station, the time-based filtering process of the observations is interrupted and, once the observations of all remote stations become available again, must be reinitialized and the process has to reconverge. The reinitialization and reconvergence process though may take considerable time, such that during and/or after the outage of the at least one remote station it takes time to again obtain the remote station parameters with high accuracy. This fact is particularly undesirable if remote stations temporarily drop out during events that are to be monitored, such as earthquakes, volcanic activity, etc.

Moreover, during the communication link failure and the reinitialization and reconvergence process, remote station parameters cannot be reliably obtained, a fact that is disadvantageous particularly if a continuous history of remote station parameters, such as positions of the remote stations, is required.

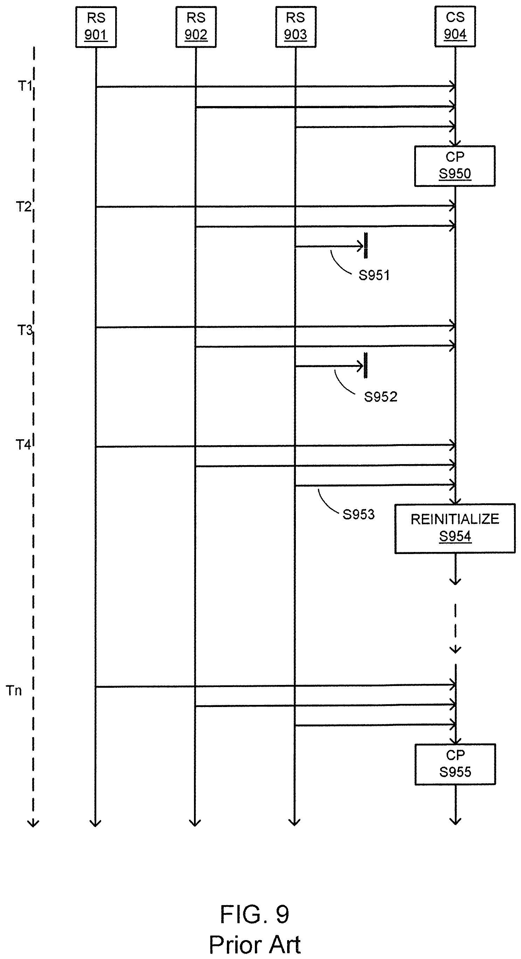

Fig. 9 illustrates a corresponding surveillance system including three remote stations 901, 902 and 903, and a central station 904. In operation the three remote stations 901, 902 and 903 each report, at a first instant in time T1, an epoch of observations to the central station 904. In an operation designated S950 the central station performs the combined processing of the three epochs of observations from the remote stations 901, 902 and 903, in order to determine the remote station parameters associated with each of the three remote stations 901, 902 and 903. At the next instant in time T2 it is assumed that a communication link between the remote station 903 and the central station 904 failed, as illustrated by reference numeral S951, so that at the time instant T2 the central station does not receive a part of observations from the remote station 903. The same situation persists at the time instant T3, that is, the central station 904 still does not receive the epoch of observations from the remote station 903, as illustrated at reference numeral S952.

At time instant T4 it is assumed that the communication link from the remote station 903 is up again, so that at time instant T4 the central station receives epochs of observations also from the remote station 903, as illustrated at reference numeral S953. However, as the epochs of observations at time instances T2 and T3 from the remote station 903 are missing, the central station cannot simply continue with the combined processing based on operation S950, as this process relies on a continuous supply of epochs from all remote stations, but has to reinitialize the combined to processing as illustrated at reference numeral S954, which may be a time consuming process. In Fig. 9 it is assumed that at a time instant Tn the reinitialization and reconvergence process is completed so that at the time instant Tn the central station can continue with the combined processing, as illustrated at reference S955.

Between time instances T4 and Tn remote station parameters can therefore not be reliably computed, even if the central station receives epochs of observations from all remote stations. Moreover, remote station parameters cannot be computed for remote station 903 for time instances T2 and T4. Consequently the time sequence of remote station parameters computed by the central station has an undesirable gap and/or may be unreliable.

WO 2013123439 A1 refers to wireless electronic sensing systems. Sensing devices can be used in a sensor network capable of simultaneously detecting characteristics at various locations. In an implementation each sensor device within the network and include components to read data from a detector, perform some local processing and send data to a centralised server. At the server the data from various sensor types and sensor locations can be used to produce an actionable result. When taking in aggregate, the information provided by the various sensing devices can be processed and reduced to an actionable result based on the multiple sensed locations. Sensed signals can be stored over time as data, and a transmitter can transmit the data in response to a communication channel being available. Physical locations of gaskets can be determined based on received sensor data. Geographic attributes can be assigned to sensor data that is collected. A global positioning system can be used to identify the coordinates of a physical location of an outlet into which a gasket is plugged. A gasket can timestamp measured data points at the time of measurement and before they are transmitted, to provide increased precision and to avoid a varying or unknown delay between the time of measurement and the time of arrival.

### Summary of the invention

It is therefore desirable to provide a reliable and uninterrupted determination of remote station parameters for the remote stations.

This object of the invention is solved by the subject matter of the independent claims. Advantageous embodiments of the invention are disclosed by the dependent claims.

### Brief description of the drawings

- Fig. 1: illustrates a configuration of a surveillance system according to an embodiment of the invention;
- Fig. 2: illustrates operations of a method for determining a time sequence of remote station parameters according to an embodiment of the invention;
- Fig. 3: illustrates a configuration of a surveillance system and a time sequence of events according to an embodiment of the invention;
- Fig. 4: illustrates operations of a method for determining remote station parameters according to an embodiment of the invention;
- Fig. 5: illustrates a configuration of a surveillance system and a time sequence of events according to an embodiment of the invention;
- Fig. 6: illustrates operations of a method for determining remote station parameters according to an embodiment of the invention;
- Fig. 7: illustrates a remote station parameter log according to an embodiment of the invention;
- Fig. 8: illustrates a configuration of a surveillance system and a time sequence of events according to an embodiment of the invention;
- Fig. 9: illustrates a configuration of a known surveillance system and a time sequence of events.

### Detailed description of the preferred embodiments

Preferred embodiments of the invention are described below with respect to the Figs. While the below description exemplifies individual embodiments of the invention, it is understood that the respective embodiments may be combined with one another and that also individual features of embodiments may be combined with other embodiments or the features thereof.

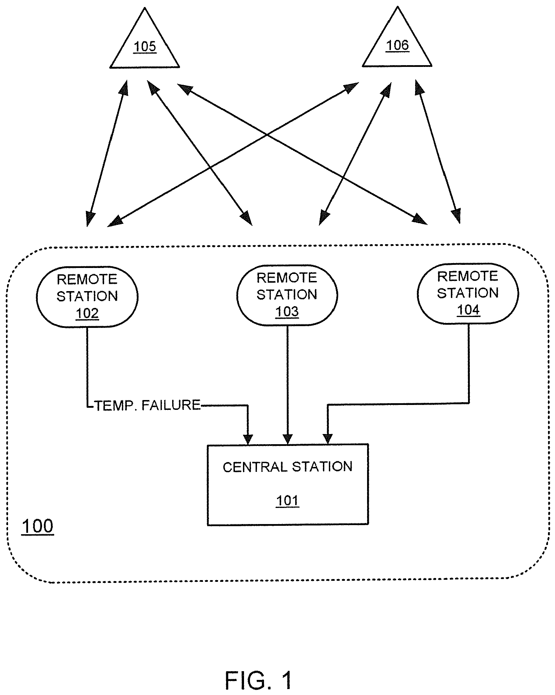

Fig. 1 illustrates a configuration of a surveillance system according to an embodiment of the invention. Fig. 1 illustrates a surveillance system 100, including a central station 101 and a plurality of remote stations 102, 103 and 104. It is understood that a smaller or larger number of remote stations than in the shown embodiment may be present.

The surveillance system of Fig. 1 is provided for determining a time sequence of remote station parameters in association with each of a plurality of remote stations of the surveillance system. This includes obtaining a time sequence of epochs of distance observations from each of the plurality of remote stations and the performing of a combined real time processing of the epochs to determine a time sequence of remote station parameters in association with each of the plurality of remote stations. Upon an interruption of a first communication link between a first remote station and the central station epochs of distance observations for each of remaining remote stations are intermediately stored at the central station during the interruption of the first communication link. After reestablishment of the failed communication link the first remote station supplies the epochs of distance observations that were not submitted due to the failure of the communication link and the central station performs a combined recapture processing of the received epochs of distance observations from the first remote station and the intermediately stored epochs of distance observations from the remaining remote stations after reestablishment of the first communication link, to determine history remote station parameters in association with each of the remote stations during the interruption of the first communication link.

More precisely, the remote stations perform a time sequence of observations, such as distance measurements to objects 105 and 106, and report their observations as a time sequence of epochs to the central station 101. The central station performs a combined processing of all epochs to determine remote station parameters associated with the remote stations. The combined processing of the epochs of observations allows determining the remote station parameters with higher accuracy as compared a determination of each remote station parameter solely on the basis of the observation by the respective remote station.

The combined processing of the epochs of observations may include a time dependency, wherein the determination of the remote station parameters is based on the time sequence of observations at the remote stations. Filters such as a Kalman are known as suitable for performing such time based filtering, in the embodiment of distance observations by the remote stations. However, the time based filtering process generally requires a continuous supply of the time sequence of epochs of observations, and is disturbed if observations in the time sequence of observations from the remote stations are missing. Missing observations potentially disturb the filtering process and reduce accuracy. If observations from the remote stations are missing, as set out with regard to Fig. 9, the combined processing of the observations reported from the remote stations must be reinitialized and only after reconvergence of the combined processing, for example after reconvergence of a time based filtering, accurate remote station parameters can again be determined. In this case, however, the determination of the time sequence of remote station parameters has a time gap starting with the first missing observation from a dropped out remote station to the end of the reconvergence of the combined processing after the dropped out remote station again provides observations to the central station.

To avoid this problem and time delay associated therewith, according to an embodiment, at the central station 101 a time sequence of remote station parameters is obtained in association with each of the plurality of remote stations 102, 103 and 104 of the surveillance system 100.

This includes obtaining a time sequence of epochs of distance observations at each of the plurality of remote stations and combined real time processing of the epochs to determine a time sequence of remote station parameters in association with each of the plurality of remote stations. The combined real time processing refers to the fact that that the epochs of observations are processed once they are received from the remote stations. Herein, an epoch includes at least distance observations at a remote station at a particular instant in time.

When an interruption of a first communication link between a first remote station of the plurality of remote stations and the central station is detected, in the embodiment of Fig. 1 exemplified by the communication link between the remote station 102 and the central station 101, the combined processing of the epochs of distance observations at the central station is halted, and epochs of distance observations for each of remaining remote stations of the plurality of remote stations, i.e. the remote stations that do not have a failed communication link, in the embodiment of Fig. 1 exemplified by the remote stations 103 and 104, are intermediately stored during the interruption of the first communication link at the central station.

Likewise the first remote station with the failed communication link, in Fig. 1 remote station 102, also intermediately stored or commands intermediate storage of the epochs of observations during the time of the failure of the first communication link.

When a reestablishment of the first communication link is detected, the intermediately stored epochs of distance observations at the first remote station are transmitted to the central station through the reestablished first communication link.

A combined recapture processing of the received intermediately stored epochs of distance observations at the first remote station and the remaining remote stations is then performed after reestablishment of the first communication link, to determine history remote station parameters in association with each of the remote stations during the interruption of the first communication link.

In other words, after the transmission of the intermediately stored epochs of observations at the first remote station with the failed communication link the central station has available all the epochs of observations from all remote stations, the central station can continue the combined processing from the point in time of detection of the failure of the first communication link, based on the now available epochs of observations also from the first remote station, to determine the missing or inaccurate remote station parameters as history remote station parameters. Preferably, the combined recapture processing is carried out swiftly, so as to catch up as soon as possible with the continued real-time supply of epochs of observations from the remote stations. After all intermediately stored epochs of observations have been used in the combined recapture processing and all history remote station parameters have been determined, the regular real time processing of epochs can be continued at the central station.

The history remote station parameters may thus correspond to the remote station parameters that would have been obtained without failure of the communication link, with the only difference that they have been computed not in real time in the combined processing step, but during the recapture processing.

While the combined recapture processing may be based on the distance observations from all remote stations, according to an alternative the combined recapture processing may be performed only on the basis of a subgroup of the epochs of observations at the remote stations obtained during the interruption of the first communication link, that is for a subgroup of time instances, to determine a corresponding subgroup of history remote station parameters for each remote station.

According to an embodiment, a surveillance system may be provided to monitor the position of the remote stations of the surveillance system or to monitor the position of one or more objects in the monitoring area. The surveillance system may also be used to monitor other parameters in the monitoring area, such as atmospheric conditions.

According to an embodiment the surveillance system is a surveillance system that uses navigation satellites to determine the positions of the remote stations. In this case the objects 105 and 106 as shown in Fig. 1 constitute such navigation satellites in an exemplary manner. In operation, each remote station determines its distance to one or multiple navigation satellites using known estimation techniques, such as based on time of flight measurements or phase measurements. The distances to the navigation satellites measured by the individual remote stations are then reported to a central station. The central station performs a combined processing of all measured distances, reported by all remote stations, in order to come up with a highly accurate determination of the positions of the individual remote stations. The combined processing allows to at least reduce measurement errors in the distance measurements by the individual remote stations, and thus of the position determination process.

Such a surveillance system using navigation satellites may be employed in measuring tectonic movement, such as for earthquake prediction systems or surface mining, or the monitoring of volcanic activity.

According to an embodiment a surveillance system uses navigation satellites and distance measurements in the monitoring of atmospheric conditions such as for weather forecasting. Changing atmospheric conditions change the time of flight of signals from the navigation satellites to the remote stations and thus the distance measurements at the remote stations. If the positions of the remote stations and to the orbits of the navigation satellites are known and thus the true distances of the remote stations to the navigation satellites, the differences between the true distances and the distances reported from the remote stations can be used by the central station to assess the variation of the time of flight of the signals from the navigation satellites to the remote stations. The central station can then determine corrections to the distance observations and based on the corrections to the distance observations resulting from the time of flight variations, atmospheric conditions such as humidity in the atmosphere may be determined. A combined processing of time of flight variations determined in association with a plurality of remote station allows the accurate determination of atmospheric conditions in a monitoring area.

According to another embodiment a surveillance system uses laser beams or other optical signals, including infrared light, emitted by the remote stations to determine the distance between the remote stations and one or multiple targets. In the embodiment shown in Fig. 1, the objects 105 and 106 constitute such targets. The targets may be any position in the monitoring area, such as landmarks, or elements of a moving target. The targets may also be constituted by reflectors deployed in the monitoring area, to reflect the optical signals emitted by the remote stations back to the remote stations for improving the distance observations. The distance measurements are reported to the central station.

Under the assumption that the positions of the remote stations are known, the central station can perform a combined processing of the distance measurements to obtain the positions of the at least one target.

Alternatively, under the assumption that the position of the at least one target is known, the central station can perform a combined processing of the distance measurements to determine the positions of the remote stations.

Combinations of surveillance systems using navigation satellites and laser beams are possible.

Each of the remote stations 102, 103 and 104 as illustrated in Fig. 1 constitute units arranged in the monitoring area. The remote stations preferably include antennas, sensors, optical units, and similar equipment to perform the required distance observations to the object. In Fig. 1 objects 105 and 106, such as navigation satellites of a GNSS system, or targets deployed in the monitoring area. Moreover, the remote stations may include a processing unit to process the received signals in order to obtain a distance measurement and to perform further processing, such as preprocessing or post processing of the signals before and after distance determination. The processing unit may be implemented as hardware or software or combinations thereof. The remote stations may be constituted by a single unit or may be distributed devices, as needed according to circumstances.

The central station 101 preferably is equipped with the required processor or processors to perform the combined processing of the received observations from the remote stations. Further to the observations from the remote stations to the central station may receive other information for supporting the combined to processing operations to octane the remote station parameters. The further information may include detailed information on the orbits of navigation satellites, position information of the targets 105 and 106, and/or position information with respect to the remote station 102, 103 and 104. The central station may be realized as a single unit, or may be realized as a distributed arrangement with suitable communication capabilities to exchange information between the individual components for the combined processing of the distance observations. The central station may be realized in hardware or software, or combinations thereof.

The transmission of the distance observations from the remote stations to the central station may be performed using any suitable means, such as the radio communication links and/or fixed wired communication links. The remote stations may use existing communication systems or such as mobile communication systems, fixed wired communication systems, satellite communication systems and the Internet or other networks.

According to an embodiment, the central station is provided for determining a time sequence of remote station parameters in association with each of a plurality of remote stations of a surveillance system, and includes a processor for obtaining a time sequence of epochs of distance observations at each of the plurality of remote stations and combined real time processing of the epochs to determine a time sequence of remote station parameters in association with each of the plurality of remote stations, wherein an epoch includes at least distance observations at a remote station at a particular instant in time, a detector for detecting an interruption of a first communication link between a first remote station of the plurality of remote stations and the central station, a storage for intermediate storing of epochs of distance observations for each of remaining remote stations of the plurality of remote stations at the central station during the interruption of the first communication link, wherein the detector is adapted for detecting reestablishment of the first communication link, the storage is adapted for receiving intermediately stored epochs of distance observations at the first remote station through the reestablished first communication link, and the processor is adapted for combined recapture processing of the received intermediately stored epochs of distance observations at the first remote station and the remaining remote stations after reestablishment of the first communication link, to determine history remote station parameters in association with each of the remote stations during the interruption of the first communication link.

The detector for detecting the interruption of the communication link may be realized by any suitable process or hardware arrangement, such as for obtaining a report on the interruption of the communication link, or generating a timeout signal upon absence of epochs of distance observations associated with a certain instant in time from a certain remote station.

The storage for intermediate please storing the epochs of distance observations the may be an element of the central station or arranged external thereto, connected to the central station by any suitable communication link.

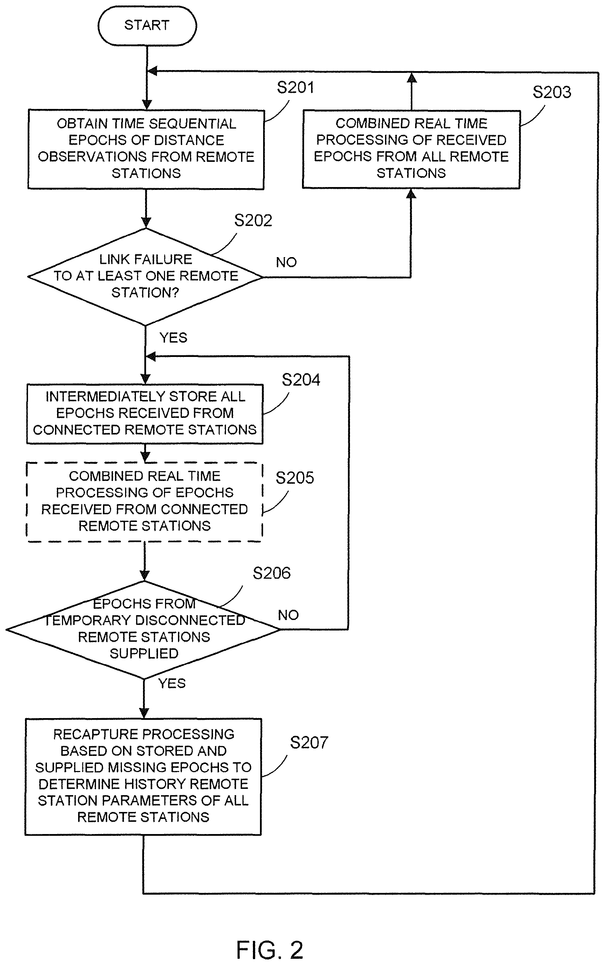

Below a further embodiment of the invention is described with respect to Fig. 2.

Fig. 2 illustrates operations of a method for determining at a central station of a surveillance system a time sequence of remote station parameters in association with each of a plurality of remote stations of the surveillance system, such as the surveillance systems described in respect of the preceding embodiments.

The remote station parameters, as noted with respect to the preceding embodiments, may be positions of the remote stations, positions of objects monitored by the remote stations and/or relate to atmospheric conditions. The observations at the remote stations and may be made using measurements on signals from navigation satellites, such as from a GNSS system, or may be made using laser signals or other optical signals, or combinations thereof.

The sequence of operations illustrated in Fig. 2 may preferably be carried out at a central station of the surveillance system, such as by the central station 101 shown in Fig. 1. However, the embodiment of Fig. 2 is not limited thereto.

In a first operation S201 the central station obtains a time sequence of epochs of distance observations from remote stations. The transmission of the distance observations may be performed using any suitable means as noted above.

In an operation S202 the central station determines whether there is any failure of a communication link to at least one remote station. This determination of the link failure may be carried out using any suitable detection process. For example, the determination may be based on a report from a communication system handling the transmission of the observations towards the central station a report from a communication system, or may be based on a determination of the absence of an observation from the at least one remote station, for example using a timer and a timeout time for reception of the observations from the remote stations. If the central station does not receive an observation associated with a particular instant in time, such as within certain time limits set by the timer, the central station may conclude that the link to the remote station failed.

In operation S202 it is determined that there is no link failure to the remote stations reporting their observations, the central station performs a combined real time processing of the received group of epochs from all remote stations in an operation S203. The combined real time processing of the observed distances between the remote stations and the objects, such as the remote stations 102, 103 and 104 and the objects 105 and 106 in Fig. 1, yields the remote station parameter associated with each of the remote stations, such as a position of the remote station, position of a target, or other type of information such as atmospheric condition associated with a variation in the distance determination, like humidity.

If in operation S202 it is determined that at least one communication link between a remote station at the central station failed, the flow of operations continues with operation S204. In the example of Fig. 1 it is assumed that the remote station 102 suffers such temporary failure of the communication link between the remote station 102 and the central station 101.

In operation S204 the central station intermediately stores all epochs received from the still connected remote stations without communication link failure, in the example of Fig. 1 remote stations 103 and 104. For this purpose, the central station includes a storage unit or is connected to a suitable storage unit at another location.

Similarly, not shown in Fig. 2, the remote station with the communication link failure to the central station, and the example of Fig. 1 remote station 102, may also intermediately store the epochs of observations during the communication link failure. These epochs of observations may be stored locally at the remote station with the communication link failure, or at an intermediate unit, such as along the communication link towards the central station.

After the communication link failure to at least one of the remote stations the central station may continue to perform a combined real time processing of the epochs received from the remaining connected remote stations without the communication link failure, as illustrated in operation S205. Thus, the central station continues with the combined real time processing of the group of epochs from the remaining remote stations during the interruption of the first communication link to determine remote station parameters of each of the remaining remote stations during the time of interruption of the first communication link. As indicated by the dashed line in Fig. 2, operation S205 is optional, according to the invention, the central station holds the combined to processing operations altogether.

In operation S206 it is determined whether the communication link to the dropped out remote station is reestablished and/or whether the missing epochs from the temporarily disconnected remote station, remote station 102 in Fig. 1, have been supplied. If in operation S206 the decision is "no", the communication link failure persists and the flow of operations returns to operation S204, to the intermediate storage of the observations at the central station, and at the remote station with the failed communication link.

If in operation S206 the decision is "yes", the central station has available now all groups of epochs from all remote stations at all instances in time at which epochs of distance observations have been generated, including the instances in time during the temporary communication link failure between the remote station 102 and the central station, and continues with operation S207 and the combined recapture processing of the received intermediately stored epochs of distance observations at the first remote station and the remaining remote stations after reestablishment of the first communication link, to determine history remote station parameters in association with each of the remote stations during the interruption of the first communication link.

The combined recapture processing includes continuing with the combined processing of the group of epochs of observations from the remote stations starting with the group of epochs of observations directly subsequent in time to the last processed group of epochs of observations from the remote stations before determining the communication link failure, to determine the history of the remote station parameters during the communication link failure. Following thereto, the second group of epochs following in time to the determination of the communication link failure is processed in the combined processing, and so on, until all intermediately stored groups of epochs have been processed in the combined processing and all history remote station parameters have been determined. The flow of operations then continues with the next real time group of epochs of observations supplied by the remote stations to determine the next set of real time remote station parameters associated with the next instant in time.

During this process all epochs of observations arriving at the central station are intermediately stored until the combined recapture processing has caught up with the real-time supply of epochs of observations from the remote stations, including those epochs of observations arriving after reestablishment of the failed communication link during the carrying out of the combined recapture processing at the central station.

After completing the combined recapture processing the flow returns to operation S201 and thus to the normal real-time combined processing operations of the observations from the remote stations to determine real time remote station parameters, until the next communication link failure occurs.

Advantageously, by performing the combined recapture processing based on the intermediately stored observations from the remote stations there, a complete history of remote station parameters may be provided. Moreover, as the combined processing is sensitive to missing epochs of observations and has to be reinitialized and reconverge after such occurrence of missing epochs of observations during a convocation link failure, reinitialization and reconvergence of the combined processing can be avoided in accordance with the embodiment.

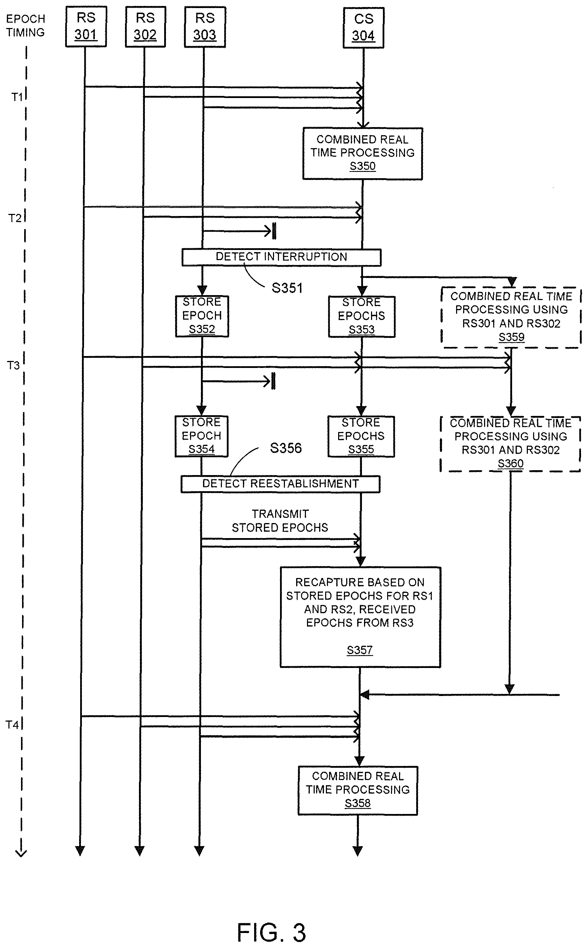

In the following a further embodiment of the invention will be described with respect to Fig. 3.

Fig. 3 illustrates a configuration of a surveillance system and a time sequence of events according to an embodiment of the invention. The illustration of Fig. 3 may be on the basis of the surveillance system shown in Fig. 1, however, is not limited thereto.

Fig. 3 illustrates three remote stations 301, 302 and 303 in an exemplary manner, such as described with respect to the previous embodiments. It is understood that the different number of remote stations may be provided. Moreover, Fig. 3 illustrates a central station 304, such as described with respect to the previous embodiments. Moreover, Fig. 1 illustrates epoch timings, including timings T1, T2, T3 and T4. At each epoch timing the remote stations transmit their respective epoch of observations to the central station. The central station that receives the individual epochs of observations as a group of observations associated with a particular epoch timing.

At the first instant in time T1 it is assumed that all remote stations have a functioning communication link to the central station and thus are able to transmit their individual epoch of observations at instant T1 to the central station. The central station 304, upon receiving the observations from the remote stations, performs a combined real time processing step of the observations in an operation S350, to obtain the remote station parameters associated with the remote stations 301, 302 and 303 at time instant T1.

At the next instant in time instant T2 it is assumed that the communication link between the remote station 303 and the central station 304 has failed, while in the communication links between the remote station 301 and the central station and the remote station 302 at the central station are unaffected. This interruption of the communication link between the remote station 303 and the central station 304 is detected in an operation S351, such as outlined with respect to previous embodiments.

Following thereto, in an operation S353 the central station intermediately stores in the epochs of observations received from the remote stations 301 and 302 at time instant T2. Further thereto, the remote station 303 having the failed communication link also intermediately stores or instructs intermediate storage of the epoch of observations at time instant T2.

At the next instant in time T3 it is assumed that the situation is unchanged, that is, remote stations 301 and 302 have a functioning communication link to the central station 304, whereas the communication link between the remote station 303 and the central station 304 is still down. Therefore, in operation S354 the remote station 303 intermediately stores in the epochs of observations at time instant T3. Further thereto the central station 304 stores in an operation S355 the epochs of observations received from the remote stations 302 and 303 in association with time instant T3.

Thereafter it is assumed in an operation S356 that the reestablishment of the communication link between the remote station 303 and the central station 304 is detected. This detection may be as out with respect to the previous embodiments, such as by receiving an activation message from a communication network or based on the fact that the remote station 303 as detected the availability of the communication link to the central station and transmits the intermediately stored epochs, stored in operations S352 and S354.

Once in the central station has available all epochs of observations, that is the ones transmitted from the remote station 303, and the intermediately stored epochs from remote stations 301 and 302 that were intermediately stored in operations S353 and S355, the central station performs a combined recapture processing of the observations at the instances in time T3 and T4, to determine history remote station parameters in association with each of the remote stations during the interruption of the first communication link. In other words, in the combined recapture processing the central station computes all those remote station parameters that could not be obtained due to the failure of the communication link between the remote station 303 and the central station 304.

Following thereto, once and the central station receives at time instant T4 epochs of observations again from all remote stations 301, 302 and 303, the central station continues with the combined real time processing in an operation S358.

Thus, advantageously, a continuous time sequence of remote station parameters can be obtained, without missing any due to the communication link failure. Further thereto a time-consuming reinitialization and reconvergence process of the combined real time processing can be avoided. With the recapture processing a time continuous sequence of epochs of observations has been processed so that the central station can again commence with the combined real time processing of epochs of observations as if no interruption had occurred.

During the interruption of the communication link between the remote station 303 and the central station 304, the central station halts the real time processing of observations altogether, and perform recapture processing as soon as the intermediately stored epochs from the failed remote station are available, after the reestablishment of the communication link, to catch up with the combined real time processing. Alternatively, during the communication link failure central station may continue with a combined real time processing of the epochs of observations from the remaining remote stations at time instant T2, in the case of Fig. 3 from the remote stations 301 and 302, as illustrated by an operation S359, followed by a combined real time processing of the epochs of observations from the remote stations 301 and 302 in an operation S360. This combined real time processing of the remaining remote stations can be continued as long as the recapture processing in operation S357 has not been concluded.

The intermediate combined processing of the remaining remote stations allows continuing to obtain real-time remote station parameters at least for the remote stations with a functioning communication link to the central station, which is particularly advantageous in applications where a continuous supply of real time remote station parameters is desirable.

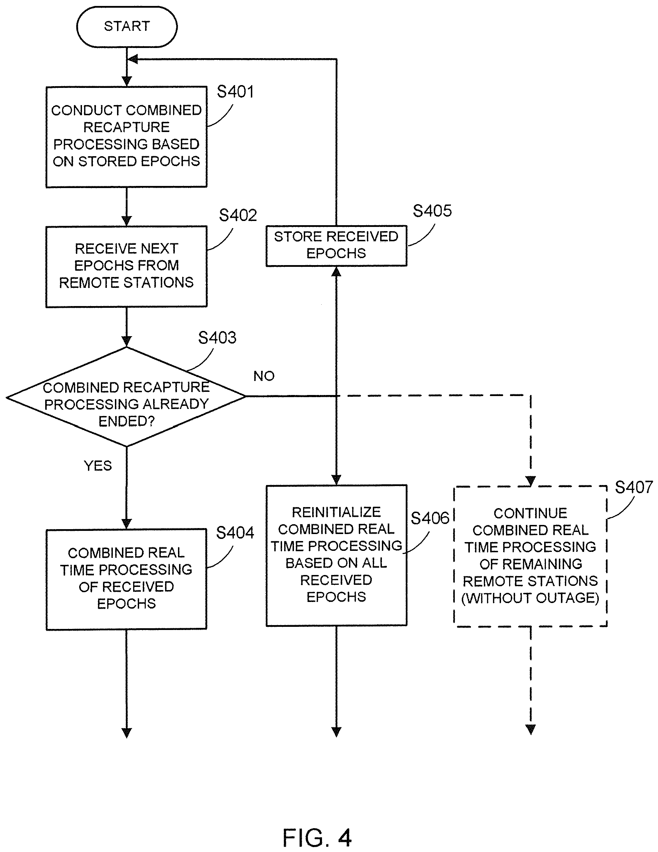

A further embodiment of the invention will be described with respect to Fig. 4.

Fig. 4 illustrates operations of a method for determining remote station parameters according to an embodiment of the invention. The operations shown in Fig. 4 may be carried out by using the hardware configurations illustrated with respect to the preceding embodiments, however, the embodiment of Fig. 4 is not limited thereto.

In an operation S401 the central station conducts a combined recapture processing based on the intermediately stored epochs of observations, as detailed with respect to the preceding embodiments, such as illustrated by operation S207 of Fig. 2.

In an operation S402 the central station, after reestablishment of a failed communication link to at least one of the remote stations, the central station receives the next group of epochs at the next instant in time from all of the remote stations after reestablishment of the failed communication link, such as remote stations 301, 302 and 303 of figure 3.

In an operation S403 it is subsequently determined whether the combined recapture processing has already ended, such as in the combined recapture processing described with respect to operation S207 in Fig. 1.

If the decision in operation S403 is "yes", in an operation S404 the central station continues with the combined real time processing of the received epoch from all remote stations, as described.

However, if in operation S403 the decision is "no", the epochs received from the remote stations with functioning communication link are intermediately stored in an operation S405 at the central station and the flow returns to operation S401. Parallel thereto in an operation S406 the central station reinitializes the combined real time processing based on the epochs of observations received from all remote stations from operation S402.

Thus, in the embodiment of Fig. 4 the central station determines whether the combined recapture processing has been concluded before a next epoch of distance observations is received from each of all of the plurality of remote stations and performs, if the combined recapture processing has not been concluded, parallel to the recapture processing a reinitialization of the combined real time processing on the basis of the next epoch of distance observations that becomes available from each of the plurality of remote stations.

Operations may continue with the reinitialized combined real time processing of operation S406, or with the continued combined real time processing of operation S404 upon successful conclusion of the recapture processing. In particular, if the recapture processing cannot be concluded in an acceptable timeframe, or if the communication link failure repeats, operations may favorably be continued in this manner.

Alternatively, instead of a re-initializing the combined real time processing in operation S406, in an operation S407 the central station may continue, if the combined recapture processing has not been concluded as determined in operation S403, a combined real time processing on the basis of the next epoch of distance observations at the remaining remote stations, thus the remote stations without communication link failure. The central station thus "continues with what it has", instead of reinitialization or combined recapture processing, in the process of determining remote station parameters, which may be advantageous in case of repeated link failures to a remote station.

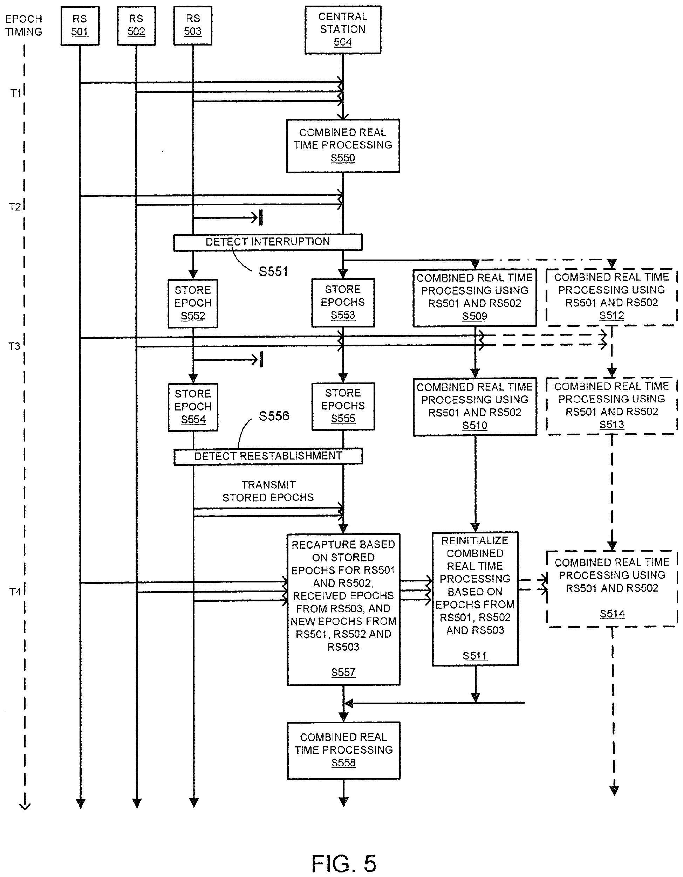

Further embodiment of the invention will be described with respect to Fig. 5.

Fig. 5 illustrates elements of a surveillance system according to an embodiment as well as a time sequence of operations. The illustration of Fig. 5 may be on the basis of the surveillance system shown in Fig. 1, however, is not limited thereto.

Fig. 5 illustrates 3 remote stations 501, 502 and 503, as for example described with regard to the preceding embodiments. Moreover, Fig. 5 illustrates a central station 504 for receiving epochs of distance observations from the remote stations 501, 502 and 503. Fig. 5 illustrates four time instances T1, T2, T3 and T4, at which epochs of distance observations are transmitted from the remote stations to the central station.

The time interval between the transmission of the epochs at the time instances T1, T2, T3 and T4 may be designed as needed according to circumstances and application. For example, in a surveillance system for monitoring tectonic movement, the time intervals may be long, for example several hours or even days. In other applications such as for earthquake monitoring, shorter periods may be selected, such as in the range of some minutes. In other applications the time instances may be 1s, or less, for example in open mining applications, or on construction sites. It is also conceivable to dynamically vary the time intervals between the transmission of the epochs of distance observations, for example, upon a certain event, such as certain motion, and similar.

At a first instant in time T1 the remote stations 501, 502 and 503 transmit any part of distance observations to the central station 504. The central station receives the epochs as a group of epochs of time instant T1 and performs a combined real time processing in an operation S550. While the operations in Fig. 5 start with a time instant T1, it is assumed that at further time instances preceding time instant T1 further epochs of distance observations have been transmitted to the remote station and processed in the combined real time processing step, in other words, it is assumed that the surveillance system is in a continuous state of operation.

At a time instant T2 again an epoch of observations is transmitted from each of the remote stations. However, as illustrated at operation S551, an interruption of the communication link between the remote station 503 and the central station 504 is detected, as for example set out with respect to Fig. 3.

Following thereto, the remote station 503 intermediately stores the distance observation of time instant T2 in operation S552, and the central station intermediately stores in operation S553 the distance observations from the remote stations 502 and 503 of time instant T2. Further, intermediate storage at the remote station 503 of the distance observation of time instant T3 is performed in an operation S554 at the remote station 503, and in an operation S555 the central station intermediately stores the distance observations from remote stations 502 and 503 at time instant T3.

Thereafter, reestablishment of the communication link between the first remote station 503 and the central station 504 is detected in an operation S556 and the intermediately stored epochs of observations at time instances T2 and T3 at the remote station 503 are transmitted to the central station 504.

Based on the now available epochs of observations from all remote stations 501, 502 and 503 at time instances T2 and T3 at the central station, the central station starts the combined recapture processing in an operation S557 first with the epochs of time instant T2 and then of time instant T3.

In the embodiment of Fig. 5 it is assumed that the recapture processing takes a longer amount of time, so that at time instant T4 the a next epoch of observations from the remote stations 501, 502 and 503 is received at the central station before the recapture processing based on the intermediately stored epochs of distance observations has been completed. In this case the epochs of distance observations from the remote stations 501, 502 and 503, which were intermediately stored at the central station, are fed into the recapture processing after the epochs of distance observations from the remote stations 501, 502 and 503 associated with time instant T2, and the observations associated with time instant T3 underwent recapture processing.

Thereafter in an operation S558, the central station continues with the combined real time processing to continue determining real-time remote station parameters.

While in the embodiment of Fig. 5 it is only assumed that a single group of epochs at time instant T4 arrives at the central station during the recapture processing, in other embodiments of multiple such groups of epochs may be received at the central station and intermediately stored. As long as the recapture process is quicker than the arrival of new groups of epochs of distance observations, the central station will eventually reach a state where all intermediately stored epochs of distance observations have been used in the recapture processing and can then continue with the combined real time processing in operation S558.

If the central station determines that it will not be possible to catch up with the supply of further epochs of distance observations at further instances in time, if the central station may perform the recapture processing only on epochs of distance observations associated with each second instant in time, thus skipping every other group of epochs. Other such subsampling schemes are conceivable, skipping at least one group of epochs of distance observations associated with one instant in time to reach a state in which a next epoch of distance observations can again be processed in real time.

In an embodiment, parallel to the performance of operation S553, the central station may perform, in operation S509, combined real time processing using epochs of distance observations received from the remote stations 501 and 502 in association with time instant T2, that is the remote station without communication link failure. Correspondingly, the central station can continue with the combined real time processing of the next epoch of distance observation from remote stations 501 and 502 associated with time instant T3 in operation S510.

Then, parallel to performing the recapture processing in operation S557 the central station may reinitialize the combined real time processing based on the epochs of distance observations from the remote stations 501 and 502 and 503, upon determining that the recapture process of operation S557 is not concluded when the next group of epochs of distance observations at associated with time instant T4 arrives at the central station.

Depending on circumstances the combined real time processing of operation 558 may then follow the reinitialized combined real time processing of operation S511, or may follow the recapture processing of operation S557, if it can be concluded in time.

Further, in an alternative and parallel to operations S553 - 509 at the central station, the central station may perform a combined real time processing using epochs of distance observations received from the remote stations 501 and 502 in association with time instant T2, in operation S512. Following this, the central station may perform a combined real time processing using the epochs of distance observations from the remote stations 501 and 502 in association with time instant T3 in an operation S513. Following thereto, in an operation S514 the central station may continue the combined real time processing using observations from the remote stations 501 and 502, thus continuing the determination of remote station parameters while disregarding the remote station 503 with the communication link failure.

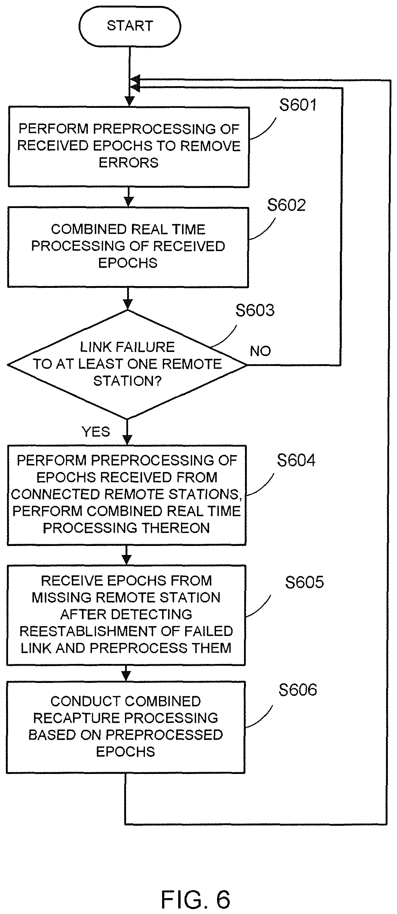

Further embodiment of the invention will be described with respect to Fig. 6.

Fig. 6 illustrates operations of a method for determining remote station parameters in accordance with an embodiment of the invention, particularly illustrating aspects of preprocessing observations at the central station. The operations of a Fig. 6 may be carried out on the basis of the hardware configuration illustrated in Fig. 1 and life, however, the embodiment of Fig. 6 is not limited thereto.

During normal operation the central station performs a separate preprocessing of the epochs of distance observations from each of the plurality of remote stations, wherein the separate preprocessing includes filtering to remove observation errors. After detecting an interruption of a communication link to one of the remote stations, such as remote stations 503 of Fig. 5, the central station continues preprocessing of only the epochs of distance observations received from the remaining remote stations, that is, the remote stations without communication link failure, in the example of Fig. 5 remote stations 502 and 503. After detecting reestablishment of the communication link, the central station performs a preprocessing of the received epochs of distance observations from at least one remote station with failed communication link. Thereafter the central station performs a combined recapture processing based on the preprocessed epochs of distance observations from each of the remote stations, such as remote stations 501, 502 and 503 of Fig. 5.

More precisely, in an operation S601 the central station during normal operation performs a preprocessing of received epochs of distance observations to remove estimation errors. The removal of estimation errors in the preprocessing step may be as known in the art.

In an operation S602 the central station performs a combined real time processing of the epochs received at a particular instant in time, such as time instant T1 of Fig. 5, to determine remote station parameters as described previously.

In an operation S603 it is determined whether a link failure to at least one remote station occurred, such as remote station 503 in Fig. 5. If in operation S603 decision is "no", the flow of operations returns to operation S601, with a preprocessing of the next epoch of distance observations in association with the next instant in time.

If in operation S603 the decision is "yes", that is, if one of the communication links failed, such as communication link to the remote station 503 in Fig. 5, the central station in an operation S604 performs a preprocessing of the epochs received from the still connected remote stations, the remote stations without communication link failure, such as remote stations 501 and 502 in Fig. 5. Further, in operation S604 the central station performs a combined real time processing on the basis of the preprocessed epochs from the connected remote stations.

In an operation S605 it is assumed that the central station receives the missing epochs of distance observations from the remote station after reestablishing of the failed communication link. The central station then preprocesses these epochs of distance observations.

In an operation S606 central station conducts the combined recapture processing such as outlined with respect to Fig. 5, based on the preprocessed epochs of all remote stations, such as the remote stations at 501, 502 and 503 of Fig. 5. Following thereto the flow of operations returns to operation S601.

With that the embodiment of Fig. 6 it can be ensured that only preprocessed epochs of distance observations are fed into the recapture processing step.

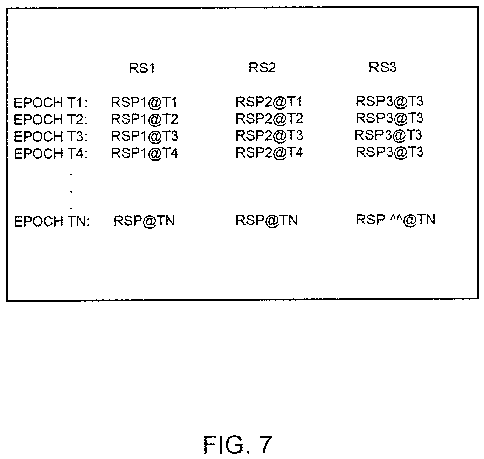

A further embodiment of the invention will be described with respect to Fig. 7.

Fig. 7 illustrates a remote station parameter log according to an embodiment of the invention, particularly illustrating the establishment of a time continues time log of remote station parameters, including following a communication link failure to at least one of the remote stations using the recapture processing and determination of history remote station parameters. The embodiment of Fig. 7 may be implemented in one of the preceding embodiments, however, is not limited thereto.

Fig. 7 illustrates an exemplary manner a remote station parameter log for sequential time instances T1 - Tn at three remote stations are RS1, RS2 and RS3. The remote station parameter log of Fig. 7 may be stored in a storage unit at the central station, or at any other location.

During normal operation of the surveillance system such as described with respect to the preceding embodiments, the central station continuously obtains epochs of distance observations from the remote stations are RS1, RS2 and RS3. Based on the observations be central station obtains the individual remote station parameters for each of the remote stations RS1, RS2 and RS3. The remote station parameters are entered into the log of remote station parameters, such as shown in Fig. 7. For example, during normal operation, at time instant T1, remote station parameters for the remote stations RS1, RS2 and RS3 are obtained as RSP1@T1, RSP2@T1, RSP3@T3. Likewise, at time instant T2 remote station parameters RSP1@T2, RSP2@T2, RSP3@T3 are determined for the remote stations RS1, RS2 and RS3 and entered into the remote station parameter log. This process is continued for subsequence instances in time, such as answers in time T3 T4.... This process constitutes thus a real time combined processing of the observations to obtain the remote station parameters in real time.

In another embodiment it is assumed that a temporary interruption of the communication link between the remote station RS1 and the central station takes place at time instances T2 and T3. In this case the central station is unable to obtain the remote station parameters for the remote station RS1. The central station altogether holds the combined processing in which case the remote station parameters for the remote stations RS2 and RS3 would also not be obtained at time instances T2 and T3. Alternatively, a central station may continue to perform a combined processing operation on the basis of the observations received from the remote stations RS2 and RS8 and thus obtain the remote station parameters for the remote stations RS and RS3 at time instances T2 and T3.

After reestablishment of the communication link to the remote station RS1, the remote station will forward the intermediately stored epochs of distance observations at time instant T2 and T3 to the central station, and the central station starts in the combined recapture processing for time instant T2 on the basis of the epochs of distance observations received from the remote stations RS1, RS2 and RS3 to obtain history remote station parameters. The remote station parameters are turned history remote station parameters, as they are obtained on the basis of the intermediately stored information at a later point in time. The corresponding remote station parameters RSP1@T2, RSP2@T2 and RSP3@T3 will then be entered into the remote station parameter log as shown in Fig. 7 at time instant T2, for the three remote stations RS1, RS2 and RS3, possibly overwriting entries for the remote stations RS2 and RS3 at time instant T2. Corresponding processing is carried out at time instant T3 and the remote station parameters RSP1@T3, RSP2@T3, RSP3@T3 are entered into the remote station parameter log.

At time instant T4 the remote stations provide epochs of distance observations associated with time instant T4 and the central station continues with the combined real time processing of the observations to obtain the corresponding remote station parameters RSP1@T4, RSP2@T4, RSP3@T3 that will be entered into the remote station parameter log. Thereafter normal operations continue the subsequence instances in time.

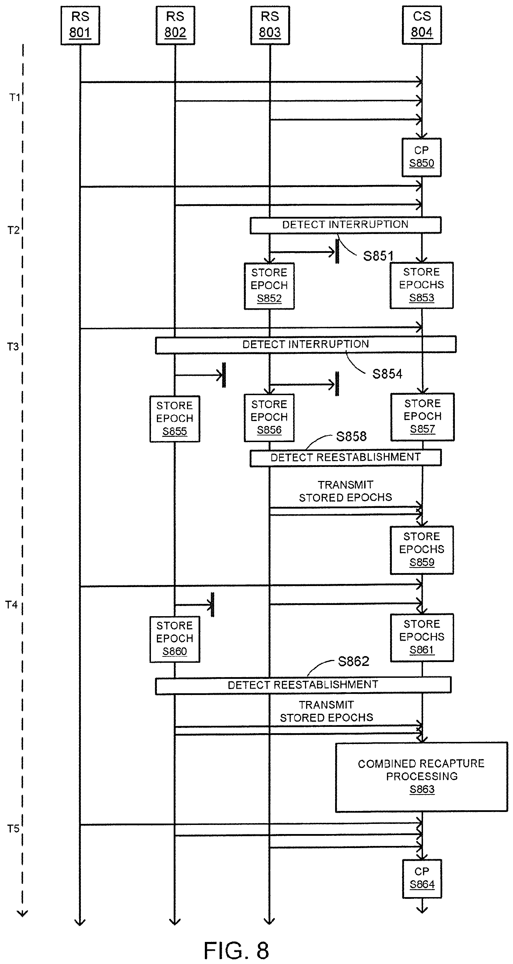

Below a further embodiment of the invention will be described with respect to Fig. 8.

Fig. 8 illustrates a surveillance system and a time sequence of operations according to another embodiment of the invention, particularly illustrating multiple communication link failures.

Briefly, this includes, after detecting the interruption of a first communication link between a first remote station at the central station, as for example described with respect to the preceding embodiments, interruption of a second communication link may be detected between a second remote station and the central station. Then, after detecting reestablishment of the first communication link the intermediately stored epochs of distance observations at the first remote station of a received through the reestablished first communication link and are stored at the central station. Subsequently, it is continued to intermediately store the newly arriving epochs of distance observations at the plurality of remote stations except of the second remote station at the central station. If then the reestablishment of the 2^{nd} communication link is detected, the intermediately stored epochs of distance observations at the second remote station are received through the reestablished second communication link. Thereafter combined recapture processing of the intermediately stored epochs of distance observations of the plurality of remote stations is performed, such as described with respect to preceding embodiments.

In the embodiment of Fig. 73 remote stations 801, 802 and 803 and a central station 804 are shown. At a 1^{st} instant in time T1 each of the remote stations transmits an epoch of distance observations to the central station, such as described with respect to preceding embodiments. The central station performs in an operation S850 a combined processing on the received epochs to determine remote station parameters for the individual remote stations 801, 802 and 803. In operation S851 an interruption of the communication link between the remote station 803 and the central station 804 is detected, such as outlined earlier. Subsequently, in an operation S853 the central station intermediately stores the epochs of distance observations received from the remote stations 801 and 802 at time instant T2. Due to the link failure the remote station 803 stores the epoch of distance observations at time instant T2 intermediately or commands intermediate storage thereof in an operation S852.

In an operation S854 interruption of the communication link between the remote station 802 and the central station 804 is detected. The interruption of the communication link between the remote station 803 and the central station is considered to process. Accordingly, in an operation S855 in the remote station 802 stores the epoch of distance observations at time instant T3, the remote station 803 stores the epoch of distance observations at time instant T3 in an operation S856, and the central station intermediately stores the epoch of distance observations associated with time instant T3, received from the remaining linked remote station 801.

In operation S858 reestablishment of the communication link between the remote station 803 at the central station 804 is detected such as outlined earlier. Correspondingly, the intermediately stored epochs at remote station 803, operations S852 and S856, are transmitted to the central station 804, where they are intermediately stored in an operation S859.

At the subsequent instant in time T4 the central station intermediately stores the epochs of distance observations received from the remote station 801 the remote station 803 in an operation S861. Correspondingly, in an operation S860 the remote station of 802 intermediately stores the epoch of distance observations at time instant T4, as the communication link is still down.

In an operation S862 reestablishment of the communication link between the remote station 802 and the central station 804 is detected, and the remote station 802 transmits the intermediately stored epochs of distance observations, operations S855 and S860, to the central station.

Accordingly, the central station now has available all epochs of distance observations from all remote stations at time instances T2, T3 and T4 and thus is able to start the combined recapture processing in an operation S863, such as object with regard to preceding embodiments.

At a time instant T5, as all remote stations have a functioning communication link to the central station, the central station receives epochs of distance observations from all remote stations and in an operation S864 performs a combined processing operation thereon.

Accordingly, the central station in the described embodiment weights with starting the recapture processing, until all communication links are reestablished and all epochs of distance observations are available at the central station for all instances in time during which communication links had failed.

In an alternative embodiment, if for example a non-temporary interruption of a communication link occurs, it is conceivable that the central station in this case continues on the basis of those remote stations that have a functioning communication link or a communication link that will be temporarily failed. In this case the central station starts the recapturing also only on the basis of a limited number of remote stations.

The above-described embodiments enable the central station to provide, during normal operation, real-time remote station parameters that may for example be entered into a remote station parameter log. Moreover, the invention enables the central station to provide, after failed communication links have been reestablished, to perform a recapture processing on the basis of intermediately stored epochs of distance observations, so as to determine history remote station parameters that may for example be entered in the remote station parameter log. The recapture processing is carried out preferably swiftly, to catch up with the ongoing real-time flow of epochs of distance observations from the remote stations, so as to be able to continue with the combined real time processing of the epochs of distance observations upon delivery of the epochs from the remote stations.

Accordingly, a complete log of remote station parameters for all instances in time may be obtained and further, after a communication link failure and reestablishment of the communication link a prolonged reinitialization and reconvergence of the combined processing can be avoided.

Preferred embodiments of the invention have been described with respect to the Figs. Even if not explicitly stated, aspects of the embodiments may be combined with one another. The embodiments illustrate configurations of the invention but are not to be construed as limiting the invention as claimed.

## Claims

1. Method for determining at a central station (101) a time sequence of remote station parameters in association with each of a plurality of remote stations (102, 103, 104) of a surveillance system (100), the method being performed by the central station and including:
Obtaining, using a respective communication link, a time sequence of epochs of distance observations made at each of the plurality of remote stations and combined real time processing of the epochs to determine a time sequence of remote station parameters in association with each of the plurality of remote stations, wherein an epoch includes at least distance observations at a remote station at a particular instant in time;
detecting an interruption of a first communication link between a first remote station (102) of the plurality of remote stations and the central station;
halting the combined real time processing of the epochs from the plurality of remote stations during the interruption of the first communication link;
intermediate storing of epochs of distance observations for each of remaining remote stations of the plurality of remote stations at the central station during the interruption of the first communication link;
detecting reestablishment of the first communication link;
receiving intermediately stored epochs of distance observations made at the first remote station through the reestablished first communication link; and
combined recapture processing of the received intermediately stored epochs of distance observations made at the first remote station and the remaining remote stations after reestablishment of the first communication link, to determine history remote station parameters in association with each of the remote stations during the interruption of the first communication link.

2. Method of claim 1, wherein the distance observations include at least one of:
distance observations from the remote stations (102, 103, 104) to navigation satellites of a navigation satellite system; and
distance observations from the remote stations to targets (105, 106) using laser light.

3. Method of at least one of the preceding claims, wherein the remote station parameters include at least one of:
positions of the remote stations (102, 103, 104); and
corrections to the distance observations.

4. Method of at least one of the preceding claims, including separate preprocessing of the epochs of distance observations from each of the plurality of remote stations (102, 103, 104), the separate preprocessing including filtering to remove observation errors;
after detecting the interruption of the first communication link, continuing preprocessing the epochs of distance observations made at the remaining remote stations;
after detecting reestablishment of the communication link, preprocessing the received epochs of distance observations made at the first remote station; and
performing the combined recapture processing after the preprocessing.

5. Method of at least one of the preceding claims, including entering the determined history remote station parameters for remote stations (102, 103, 104) into the remote station parameter log.

6. Method of at least one of the preceding claims, including detecting interruption of a second communication link between a second remote station and the central station (101) after the interruption of the first communication link;
detecting reestablishment of the first communication link;
receiving intermediately stored epochs of distance observations made at the first remote station through the reestablished first communication link and storing them at the central station;
continuing intermediate storing of newly arriving epochs of distance observations made at the plurality of remote stations (102, 103, 104) except of the second remote station;
detecting reestablishment of the second communication link;
receiving the intermediately stored epochs of distance observations made at the second remote station through the reestablished second communication link; and
combined recapture processing of the intermediately stored epochs of distance observations of the plurality of remote stations.

7. Central station (101) for determining a time sequence of remote station parameters in association with each of a plurality of remote stations (102, 103, 104) of a surveillance system (100), including
a processor for obtaining, using a respective communication link, a time sequence of epochs of distance observations made at each of the plurality of remote stations and combined real time processing of the epochs to determine a time sequence of remote station parameters in association with each of the plurality of remote stations, wherein an epoch includes at least distance observations at a remote station at a particular instant in time;
a detector for detecting an interruption of a first communication link between a first remote station (102) of the plurality of remote stations and the central station;
a storage for intermediate storing of epochs of distance observations for each of remaining remote stations of the plurality of remote stations at the central station during the interruption of the first communication link;
means for halting the combined real time processing of the epochs from the plurality of remote stations during the interruption of the first communication link;
wherein the detector is adapted for detecting reestablishment of the first communication link;
the storage is adapted for receiving intermediately stored epochs of distance observations made at the first remote station through the reestablished first communication link; and
the processor is adapted for combined recapture processing of the received intermediately stored epochs of distance observations made at the first remote station and the remaining remote stations after reestablishment of the first communication link, to determine history remote station parameters in association with each of the remote stations during the interruption of the first communication link.

8. Surveillance system including a central station (101) in accordance with claim 7 and a plurality of remote stations (102, 103, 104).

## Patentansprüche

1. Verfahren zum Bestimmen, an einer Zentralstelle (101), einer Zeitsequenz von Parametern von Gegenstellen in Verbindung mit jeder einer Vielzahl von Gegenstellen (102, 103, 104) eines Überwachungssystems (100), wobei das Verfahren von der Zentralstelle durchgeführt wird und Folgendes beinhaltet:
Erhalten, unter Verwendung einer jeweiligen Kommunikationsverbindung, einer Zeitsequenz von Epochen von Entfernungsbeobachtungen, die an jeder der Vielzahl von Gegenstellen durchgeführt werden, und kombinierte Echtzeitverarbeitung der Epochen, um eine Zeitsequenz von Parametern von Gegenstellen in Verbindung mit jeder der Vielzahl von Gegenstellen zu bestimmen, wobei eine Epoche zumindest Entfernungsbeobachtungen an einer Gegenstelle zu einem bestimmten Zeitpunkt umfasst;
Erfassen einer Unterbrechung einer ersten Kommunikationsverbindung zwischen einer ersten Gegenstelle (102) der Vielzahl von Gegenstellen und der Zentralstelle;
Anhalten der kombinierten Echtzeitverarbeitung der Epochen der Vielzahl von Gegenstellen während der Unterbrechung der ersten Kommunikationsverbindung;
Zwischenspeichern von Epochen von Entfernungsbeobachtungen für jede der verbleibenden Gegenstellen der Vielzahl von Gegenstellen bei der Zentralstelle während der Unterbrechung der ersten Kommunikationsverbindung;
Erfassen der Wiederherstellung der ersten Kommunikationsverbindung;
Empfangen zwischengespeicherter Epochen von Entfernungsbeobachtungen, die an der ersten Gegenstelle gemacht wurden, über die wieder hergestellte erste Kommunikationsverbindung; und
kombinierte Wiederaufnahmeverarbeitung der empfangenen, zwischengespeicherten Epochen von Entfernungsbeobachtungen, die an der ersten Gegenstelle und den verbleibenden Gegenstellen nach Wiederherstellung der ersten Kommunikationsverbindung gemacht wurden, um die Parameter von Gegenstellen in Verbindung mit jeder der Gegenstellen während der Unterbrechung der ersten Kommunikationsverbindung zu bestimmen.

2. Verfahren nach Anspruch 1, wobei die Entfernungsbeobachtungen mindestens eine beinhalten von:
Entfernungsbeobachtungen der Gegenstellen (102, 103, 104) zu Navigationssatelliten eines Navigationssatellitensystems; und
Entfernungsbeobachtungen der Gegenstellen zu den Zielen (105, 106) unter Verwendung von Laserlicht.

3. Verfahren nach mindestens einem der vorstehenden Ansprüche, wobei die Parameter der Gegenstellen mindestens einen beinhalten von:
Positionen der Gegenstellen (102, 103, 104); und
Korrekturen an den Entfernungsbeobachtungen.

4. Verfahren nach mindestens einem der vorstehenden Ansprüche, einschließlich separater Vorverarbeitung der Epochen der Entfernungsbeobachtungen von jeder der Vielzahl von Gegenstellen (102, 103, 104), wobei die separate Vorverarbeitung eine Filterung zur Beseitigung von Beobachtungsfehlern beinhaltet;
nach dem Erkennen der Unterbrechung der ersten Kommunikationsverbindung Fortsetzung der Vorverarbeitung der Epochen von Entfernungsbeobachtungen, die an den verbleibenden Gegenstellen gemacht wurden;
nach der Feststellung der Wiederherstellung der Kommunikationsverbindung die Vorverarbeitung der empfangenen Epochen der an der ersten Gegenstelle gemachten Entfernungsbeobachtungen; und
Durchführen der kombinierten Wiederaufnahmeverarbeitung nach der Vorverarbeitung.

5. Verfahren nach mindestens einem der vorstehenden Ansprüche, einschließlich der Eingabe der ermittelten Historie der Parameter der Gegenstellen (102, 103, 104) in das Parameterprotokoll der Gegenstelle.

6. Verfahren nach mindestens einem der vorstehenden Ansprüche, einschließlich der Erfassung der Unterbrechung einer zweiten Kommunikationsverbindung zwischen einer zweiten Gegenstelle und der Zentralstelle (101) nach der Unterbrechung der ersten Kommunikationsverbindung;
Erfassen der Wiederherstellung der ersten Kommunikationsverbindung;
Empfangen zwischengespeicherter Epochen von Entfernungsbeobachtungen, die an der ersten Gegenstelle gemacht wurden, über die wieder hergestellte erste Kommunikationsverbindung und Speichern dieser in der Zentralstelle;
Fortsetzen der Zwischenspeicherung neu ankommender Epochen von Entfernungsbeobachtungen, die an der Vielzahl von Gegenstellen (102, 103, 104) mit Ausnahme der zweiten Gegenstelle gemacht wurden;
Erfassen der Wiederherstellung der zweiten Kommunikationsverbindung;
Empfangen der zwischengespeicherten Epochen von Entfernungsbeobachtungen, die an der zweiten Gegenstelle gemacht wurden, über die wieder hergestellte zweite Kommunikationsverbindung; und
kombinierte Wiederaufnahmeverarbeitung der zwischengespeicherten Epochen der Entfernungsbeobachtungen der Vielzahl von Gegenstellen.

7. Zentralstelle (101) zum Bestimmen einer Zeitsequenz von Parametern der Gegenstellen in Verbindung mit jeder von einer Vielzahl von Gegenstellen (102, 103, 104) eines Überwachungssystems (100), einschließlich
eines Prozessors zum Erhalten, unter Verwendung einer jeweiligen Kommunikationsverbindung, einer Zeitsequenz von Epochen von Entfernungsbeobachtungen, die an jeder der Vielzahl von Gegenstellen durchgeführt wurden, und einer kombinierten Echtzeitverarbeitung der Epochen, um eine Zeitsequenz von Parametern der Gegenstellen in Verbindung mit jeder der Vielzahl von Gegenstellen zu bestimmen, wobei eine Epoche zumindest Entfernungsbeobachtungen an einer Gegenstelle zu einem bestimmten Zeitpunkt umfasst;
einer Erfassungsvorrichtung zum Erfassen einer Unterbrechung einer ersten Kommunikationsverbindung zwischen einer ersten Gegenstelle (102) der Vielzahl von Gegenstellen und der Zentralstelle;
eines Speichers zum Zwischenspeichern von Epochen von Entfernungsbeobachtungen für jede der verbleibenden Gegenstellen der Vielzahl von Gegenstellen bei der Zentralstelle während der Unterbrechung der ersten Kommunikationsverbindung;
Mittel zum Anhalten der kombinierten Echtzeitverarbeitung der Epochen von der Vielzahl von Gegenstellen während der Unterbrechung der ersten Kommunikationsverbindung;
wobei die Erfassungsvorrichtung zur Erfassung der Wiederherstellung der ersten Kommunikationsverbindung ausgelegt ist;
der Speicher für den Empfang zwischengespeicherter Epochen von Entfernungsbeobachtungen, die an der ersten Gegenstelle gemacht wurden, über die wieder hergestellte erste Kommunikationsverbindung ausgelegt ist; und
der Prozessor für die kombinierte Wiederaufnahmeverarbeitung der empfangenen, zwischengespeicherten Epochen von Entfernungsbeobachtungen ausgelegt ist, die an der ersten Gegenstelle und den verbleibenden Gegenstellen nach Wiederherstellung der ersten Kommunikationsverbindung gemacht wurden, um während der Unterbrechung der ersten Kommunikationsverbindung die Historie der Parameter der Gegenstellen in Verbindung mit jeder der Gegenstellen zu bestimmen.

8. Überwachungssystem, das eine Zentralstelle (101) nach Anspruch 7 und eine Vielzahl von Gegenstellen (102, 103, 104) beinhaltet.

## Revendications

1. Procédé de détermination au niveau d'une station centrale (101) d'une séquence temporelle de paramètres de station distante en association avec chacune d'une pluralité de stations distantes (102, 103, 104) d'un système de surveillance (100), le procédé étant mis en œuvre par la station centrale et incluant :
l'obtention, en utilisant une liaison de communication respective, d'une séquence temporelle d'époques d'observations à distance effectuées au niveau de chacune de la pluralité de stations distantes et d'un traitement en temps réel combiné des époques pour déterminer une séquence temporelle de paramètres de station distante en association avec chacune de la pluralité de stations distantes, dans lequel une époque inclut au moins des observations à distance au niveau d'une station distante à un instant particulier dans le temps ;
la détection d'une interruption d'une première liaison de communication entre une première station distante (102) de la pluralité de stations distantes et la station centrale ;
l'arrêt du traitement en temps réel combiné des époques provenant de la pluralité de stations distantes pendant l'interruption de la première liaison de communication ;
le stockage intermédiaire d'époques d'observations à distance pour chacune des stations distantes restantes de la pluralité de stations distantes au niveau de la station centrale pendant l'interruption de la première liaison de communication ;
la détection du rétablissement de la première liaison de communication ;
la réception d'époques stockées de façon intermédiaire d'observations à distance effectuées au niveau de la première station distante par l'intermédiaire de la première liaison de communication rétablie ; et
un traitement de recapture combiné des époques stockées de façon intermédiaire reçues d'observations à distance effectuées au niveau de la première station distante et des stations distantes restantes après le rétablissement de la première liaison de communication, pour déterminer les paramètres d'historique de station distante en association avec chacune des stations distantes pendant l'interruption de la première liaison de communication.

2. Procédé selon la revendication 1, dans lequel les observations à distance incluent au moins l'une parmi :
des observations à distance depuis les stations distantes (102, 103, 104) vers des satellites de navigation d'un système de satellites de navigation ; et
des observations à distance depuis les stations distantes vers des cibles (105, 106) en utilisant une lumière laser.

3. Procédé selon au moins l'une des revendications précédentes, dans lequel les paramètres de station distante incluent au moins l'une parmi :
des positions des stations distantes (102, 103, 104) ; et
des corrections aux observations à distance.

4. Procédé selon au moins l'une des revendications précédentes, incluant un prétraitement séparé des époques d'observations à distance provenant de chacune de la pluralité de stations distantes (102, 103, 104), le prétraitement séparé incluant un filtrage pour éliminer les erreurs d'observation ;
après la détection de l'interruption de la première liaison de communication, la poursuite du prétraitement des époques d'observations à distance effectuées au niveau des stations distantes restantes ;
après la détection du rétablissement de la liaison de communication, le prétraitement des époques reçues d'observations à distance effectuées au niveau de la première station distante ; et
la mise en œuvre du traitement de recapture combiné après le prétraitement.

5. Procédé selon au moins l'une des revendications précédentes, incluant l'entrée des paramètres d'historique de station distante déterminés pour les stations distantes (102, 103, 104) dans le journal de paramètres de station distante.

6. Procédé selon au moins l'une des revendications précédentes, incluant la détection de l'interruption d'une seconde liaison de communication entre une deuxième station distante et la station centrale (101) après l'interruption de la première liaison de communication ;
la détection du rétablissement de la première liaison de communication ;
la réception des époques stockées de façon intermédiaire d'observations à distance effectuées au niveau de la première station distante par l'intermédiaire de la première liaison de communication rétablie et le stockage de celles-ci au niveau de la station centrale ;
la poursuite du stockage intermédiaire des époques nouvellement arrivées d'observations à distance effectuées au niveau de la pluralité de stations distantes (102, 103, 104) à l'exception de la deuxième station distante ;
la détection du rétablissement de la seconde liaison de communication ;
la réception des époques stockées de façon intermédiaire d'observations à distance effectuées au niveau de la deuxième station distante par l'intermédiaire de la seconde liaison de communication rétablie ; et
un traitement de recapture combiné des époques stockées de façon intermédiaire d'observations à distance de la pluralité de stations distantes.

7. Station centrale (101) pour déterminer une séquence temporelle de paramètres de station distante en association avec chacune d'une pluralité de stations distantes (102, 103, 104) d'un système de surveillance (100), incluant
un processeur pour obtenir, en utilisant une liaison de communication respective, une séquence temporelle d'époques d'observations à distance effectuées au niveau de chacune de la pluralité de stations distantes et un traitement en temps réel combiné des époques pour déterminer une séquence temporelle de paramètres de station distante en association avec chacune de la pluralité de stations distantes, dans laquelle une époque inclut au moins des observations à distance au niveau d'une station distante à un instant particulier dans le temps ;
un détecteur pour détecter une interruption d'une première liaison de communication entre une première station distante (102) de la pluralité de stations distantes et la station centrale ;
un stockage pour stocker de façon intermédiaire des époques d'observations à distance pour chacune des stations distantes restantes de la pluralité de stations distantes au niveau de la station centrale pendant l'interruption de la première liaison de communication ;
un moyen pour arrêter le traitement en temps réel combiné des époques provenant de la pluralité de stations distantes pendant l'interruption de la première liaison de communication ;
dans laquelle le détecteur est adapté pour détecter le rétablissement de la première liaison de communication ;
le stockage est adapté pour recevoir des époques stockées de façon intermédiaire d'observations à distance effectuées au niveau de la première station distante par l'intermédiaire de la première liaison de communication rétablie ; et
le processeur est adapté pour un traitement de recapture combiné des époques stockées de façon intermédiaire reçues d'observations à distance effectuées au niveau de la première station distante et des stations distantes restantes après le rétablissement de la première liaison de communication, pour déterminer les paramètres d'historique de station distante en association avec chacune des stations distantes pendant l'interruption de la première liaison de communication.

8. Système de surveillance incluant une station centrale (101) selon la revendication 7 et une pluralité de stations distantes (102, 103, 104).
